# EUROPEAN PATENT APPLICATION

(11) **EP 2 236 442 A1**
(43) Date of publication of application: **06.10.2010**
(21) Application number: 10158106.4
(22) Date of filing: 29.03.2010
(51) Int. Cl.: B65G 39/02, B65G 39/09

(54) **A roller, in particular for roller or belt conveyors**

(30) Priority: 01.04.2009 IT MO20090081
(71) Applicant: Star Gomma S.r.l., 41122 Modena (IT)
(72) Inventor: Cilloni, Valentino, 41049, Sassuolo (MODENA) (IT)
(74) Representative: Colò, Chiara

(57) **Abstract**

A roller (100), particular for roller or belt conveyors, comprises heads (20) exhibiting bearing seatings (30) and/or drive transmission means couplable to the tubular part (10) of the roller via a grooved profile for a rapid and reliable mounting. The presence of reinforcing elements (60) having a grooved profile which is housable internally of the mantle of the roller (100) enables the structure of the roller to be stiffened and an increase in the load capacity thereof. A like grooved coupling can be comprised between the tubular part (10) and an external cladding thereof in order to simplify mounting and effectively preventing sliding of the cladding. The single components of a roller (100) as described above can be separately marketed and assembled directly by the final user in order to obtain rollers of desired dimensions and characteristics.

## Description

### Description.

The present invention relates to a roller, in particular of a type used for roller or belt conveyors, and/or for moving products on lines.

In the industrial field product conveying means are very widely used, with belt, roller or roller plane conveyors, and users are well aware of the need for reliable and specialised suppliers for realising the plants and for providing spare parts as the characteristics of the spare parts make it difficult and economically disadvantageous for the user to make the parts itself, even in cases where the user is a company having various types of machine tools available.

The rollers, whether bearing rollers, support rollers, switching rollers, return rollers or hanging rollers, constitute elements of the above-cited conveyors which, given the constructional characteristics and the need to have specific structural and dimensional requirements, must be ordered from an external supplier who can provide all the necessary specifications, with the consequence that the relative costs and times of provision are rather disadvantageous.

In general conveyor rollers are constituted by tubular elements constituting the mantle of the roller at ends of which heads are anchored, in which the roller bearings are housed and which possibly also contain the drive transmission means. Shape, materials and connecting means of the mantle, heads, bearings and transmission means are selected such as to realise rollers, either idle or driven, that are suitable for the type of application to which they are destined.

In prior-art rollers, the mantle is usually made of electro-welded steel or PVC with a smooth internal surface and subject to specific dimensional tolerances, especially at the coupling ends with the heads. These are provided or not with pinions destined to enmesh with the drawing chains, can be made of steel, PVC or another plastic material and can be reinforced with steel inserts at the rolling tracks of the balls of the bearings.

For applications which are not very heavy-duty, the assembly between the heads and the mantle is obtained, in rollers known as crimped rollers, by realising a spoke arrangement at the ends of mantle which enables closure between the head and mantle by keying the external smooth surface of the head in the internal smooth surface of the mantle. For more heavy-duty applications, both in terms of weights to be borne and environmental conditions, the assembly is done by welding the two parts in order to obtain a much more effective hold.

From the above it is clear how prior-art rollers are part of an overall structural complexity and how it is necessary for them to be realised, in particular in regard to the assembly between mantle and bearing heads, including in the case of crimped rollers and welded rollers, by performing specific operations such as cutting and/or heading operations, crimping or welding using specific machinery and tools which not only considerably increase the construction costs but which, as mentioned herein above, also make it practically impossible for the final user to realise them directly. The main aim of the present invention is to provide a roller, in particular for conveyor belts, rollers or roller planes, which has structural characteristics such as to enable very simple assembly between the mantle and the heads.

A further aim of the present invention is to provide a roller which can be sold in kit form such that the final user can very simply realise rollers having the desired characteristics.

A further aim of the present invention is to provide a roller wherein the transmission of the rotary motion between the heads and the mantle is achieved extremely reliably.

A further aim of the present invention is to provide a roller having very contained costs of realisation.

A further aim of the invention is to provide a roller having a rigidity and a load capacity which can be very simply modified according to needs.

The above aims are attained by a roller comprising at least a tubular element forming the mantle and heads which are couplable to the tubular element at ends thereof, wherein at least one of the heads is provided with at least an external coupling surface having a grooved profile, the internal surface of the tubular element having, at least at the coupling end with the head, a correspondingly-grooved profile.

This solution ensures a very stable coupling between the heads and the mantle, and obviates welding or crimping operations normally performed in the prior art. Further, the transmission of the rotary motion to the mantle is guaranteed very reliably.

The tubular element preferably has a constant section over the whole length, thus enabling realisation by extrusion or drawing.

The roller advantageously comprises at least a reinforcing element housed internally of the tubular element and provided with a grooved external surface correspondingly to the grooved profile of the internal surface of the tubular element. The possibility of inserting reinforcement elements with grooved profiles internally of the tubular element stiffens the roller and increases its load capacity very simply, rapidly and with a stable positioning of the elements.

The roller further advantageously comprises an external cladding provided with a groove internal profile able to couple with the external grooved surface of the tubular element, such that then mantle of the roller can have a friction coefficient which is adequate for specific uses and the possibility of sliding of the cladding on the tubular element is effectively prevented.

The roller is further mounted about a central spindle provided at ends thereof with constraint means for constraining the roller to respective guide tracks and comprises drive transmission means between the central spindle and at least one of the heads. Thanks to the grooved-profile coupling between the heads and the tubular element the rotary motion is also transferred to the mantle.

Further characteristics and advantages of the invention will better emerge from the detailed description that follows of preferred, though not exclusive embodiments of embodiments thereof, illustrated by way of non-limiting example in the accompanying figures of the drawings, in which:
figure 1 is a longitudinal cross-section of an idle roller of the invention installed in a conveyor;
figure 2 is a section view along section line II-II of figure 1;
figure 3 is a front view of a tubular element comprised in the roller of figure 1;
figure 4 is a portion of the section view along line IV-IV of figure 3;
figure 5 is a lateral view of a head of a roller of the invention;
figure 6 is a front view of the head of figure 5;
figure 7 is a section view along line VII-VII of figure 6;
figure 8 is a front view of a reinforcing element comprised in the roller of figure 1;
figure 9 is a lateral view of the reinforcing element of figure 8;
figure 10 is a portion of a section view as in figure 1 of a further embodiment of a roller of the invention;
figure 11 is a perspective and partially cutaway and exploded view of a further embodiment of a roller of the invention;
figure 12 is a perspective view of the head of the roller of figure 11;
figure 13 is a perspective view of the tubular element of the roller of figure 11.

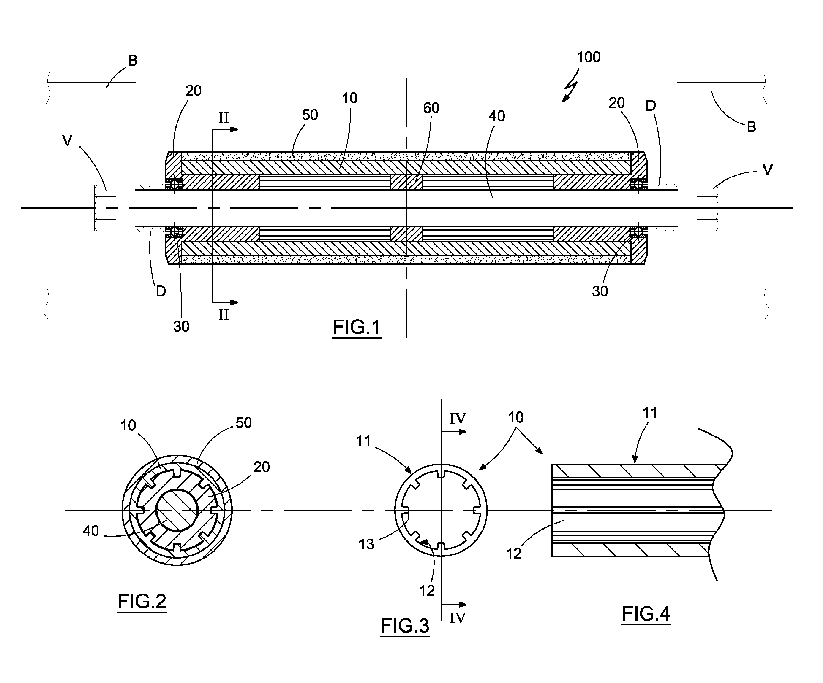

With reference to figure 1, 100 denotes an idle roller for conveyors installed between guide rails B to which the roller is anchored and maintained in position by screw means V and spacers D.

The roller comprises a tubular element 10 designed to realise the mantle of the roller, at ends of which heads 20 are constrained which contain the housing seatings of bearings 30 which enable rolling of the roller about a central spindle 40, anchored to the guide rails. The mantle of the roller comprises a cladding 50 which can be made of rubber material of various types in order to increase the coefficient of friction, or in other materials such as PVC, silicone or polyurethane, according to the desired characteristics.

A reinforcing element 60 is located in the longitudinally central zone of the roller, which reinforcing element 60 is mounted between the spindle 40 and the tubular element 10.

The section of figure 2 shows the profile of the spindle 40, the cladding 50, the tubular element 10 and the zone of the coupling head 20 with the tubular element 10.

In particular, the tubular element 10, shown in figures 3 and 4, has an external surface 11 which is smooth, and an internal surface 12 which is grooved with a constant section over the whole length, in which eight protuberances 13 extend from the internal surface towards the centre of the element.

The head 20, illustrated in figures from 5 to 7, is provided with a cylindrical surface 21 having a grooved profile comprising eight grooves 22 that correspond to the protuberances 13 of the tubular element. The head is further provided with a strike surface 23, destined to interact against the end surface of the tubular element, with a central hole 24 for passage of the spindle 40 and with a seating 25 for roller bearing 30.

Thanks to the corresponding grooved profiles of the tubular element and the head, the coupling between the two components is extremely precise and stable simply by pressing the head into the seating up to contacting the strike surface 23 against the end surface of the tubular element and any relative rotation between the head and the tubular element is prevented.

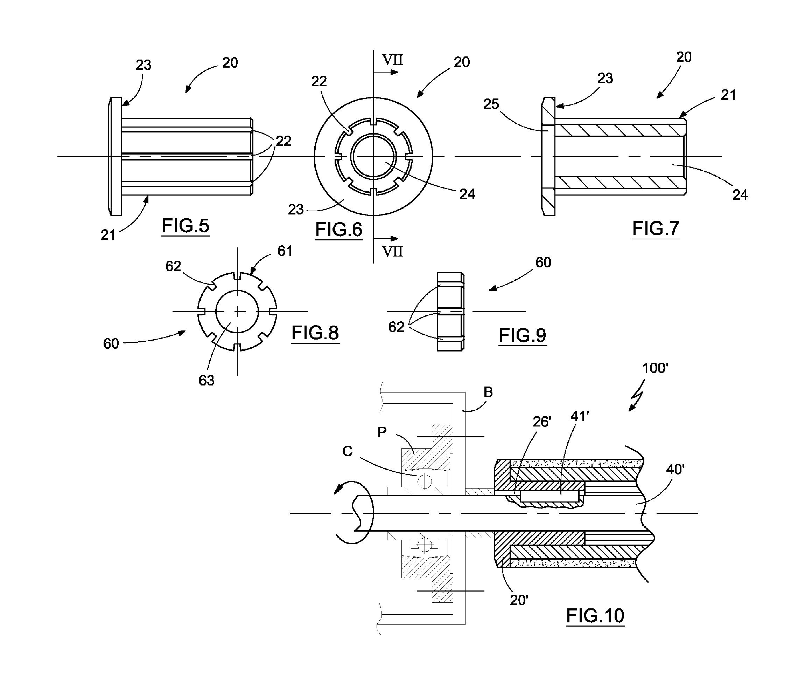

Figures 8 and 9 shows the reinforcing element 60 respectively frontally and laterally in which an external profile 61 can be seen, which is grooved and comprises eight grooves 61 destined to couple with the protuberances 13 of the tubular element, and a central hole 63 for the passage of the spindle 40.

The reinforcing element 60 is inserted in the tubular element via one of the ends and is made to slide internally up to the desired position, for example centrally in the embodiment of figure 1, and has the function of very simply increasing, in this zone, the section of the roller in order to increase the dimension thereof and reduce the deformation thereof under load.

Figures from 10 to 13 illustrate further embodiments destined to realise the driven rollers.

In figure 10, the motorisation of the roller 100' is achieved via the spindle 40', which is anchored to the rail B by a plate P, comprising the seating for a bearing P, which enables rotation of the spindle. The drive is thus transmitted to the roller by a key or tab 41' housed between a hollow in the spindle 40 and a corresponding groove 26' in the head 20'.

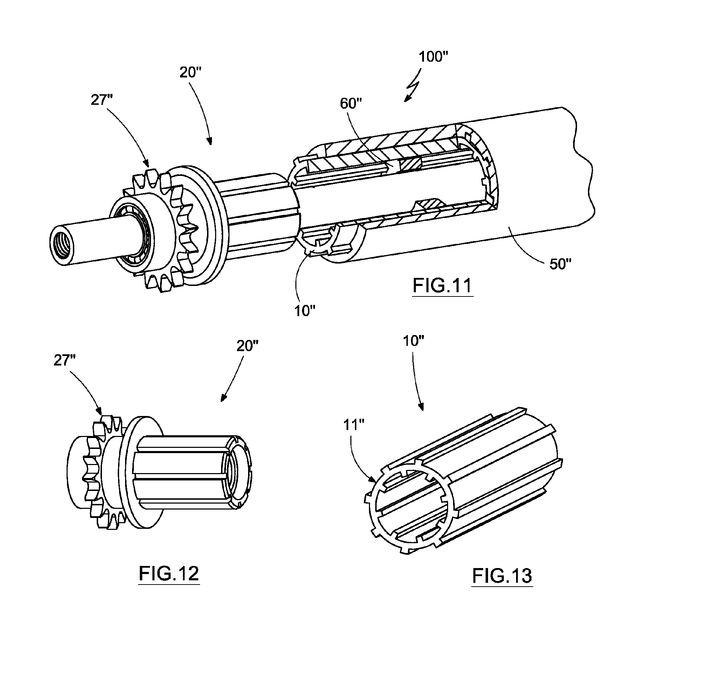

Figure 11 illustrates a further embodiment in which the motorisation of the roller 100" is achieved due to the fact that the head 20", also illustrated in figure 12, is provided with a pinion 27" in which a drive transmission chain (not illustrated in the figures) enmeshes; the drive chain runs parallel to the guide raids of the conveyor.

In the above-described embodiment, the external surface of the tubular element 10", represented in figure 13, also has a grooved profile, like the internal surface. The cladding 50", provided with a corresponding grooved profile in the internal surface thereof, couples with the tubular element and prevents any possibility of relative rotation between the two components without the necessity of providing a forced coupling.

A roller of the invention as described above has considerably reduced production costs thanks to the fact that the assembly operations of the mantle heads are considerably simplified with respect to the prior art.

The tubular element 10 can be made of PVC or another plastic material by extrusion, for example it can be made in profiled elements having a standard commercial size, i.e. 3 or 6 metres, which can thereafter be cut to the size of the roller to be obtained.

This characteristic makes the roller of the invention especially suitable for commercial marketing, independently of the single parts of which it is composed in order to enable the final user to realise, simply and economically, rollers of the invention with the desired characteristics.

For example, in order to realise rollers of a certain diameter the final user can buy the tubular elements in the form of long tubes, as well as the relative heads, the reinforcements and the claddings, then proceeding to cutting the tubular elements and the cladding and assembling the parts without having recourse to specific tools or work operations. Further, thanks to the possibilities offered by a roller of the invention, at any moment the type of cladding can be chosen, as well as the heads to be fitted to a certain tubular element and the number of reinforcements to insert internally thereof.

The last above aspect is particularly important as it becomes extremely simple to modify the rigidity and load capacity of a roller of the invention at any moment, by adding or removing reinforcing elements.

Further, where the tubular element has a grooved profile on the external surface too, as in the embodiment denoted by 10", the cladding, also grooved, is constrained thereto in a very resistant way, including in the absence of a forced coupling between the two elements, with the further advantage of enabling simple and rapid replacement thereof following wear or damage.

Finally, in solutions for driven rollers, represented in figures from 10 to 13, there is a further considerable advantage in the form of the good level of reliability of the transmission of rotary motion from the head to the mantle of the roller, due to the coupling mode between the two parts, i.e. the grooving.

As can easily be deduced, rollers of the invention are particularly suitable for use as bearing rollers, support rollers, stretchers or switchers of belt conveyors, roller conveyors or roller planes in conveying and moving plants, however, due to the characteristics of economy, reliability and simplicity in realisation can be used advantageously in sectors which can be very different to one another.

The above characteristics and related advantages exist also in a case where further variants or modifications are brought to the invention as described herein above by way of example.

The shape of the grooved coupling profiles between the heads and the tubular element or between the tubular element and the cladding can obviously vary, while guaranteeing the presence of protuberances and corresponding grooves destined to reciprocally engage.

Further, the tubular element might be provided with an internal profile which is grooved only at ends thereof.

The heads can also be of a different type with respect to what is described herein above; the number of pinions can vary, as can the number and shape of the housing seatings of the bearings. The heads can also comprise, apart from the bearings, further parts such as seals or gaskets, spacers, elastic means or any other functional element for the coupling with the spindle or the tubular element.

The materials the tubular element, the heads and the reinforcing elements are made of can be PVC, as in the preferred embodiments described herein, or can be other plastics, steel or other materials used in the prior art in the sector or of new conception.

Finally many other modifications can be brought to the roller of the invention, while remaining within the ambit of actuation of the inventive idea as described above and in the ambit of protection defined by the claims that follow.

## Claims

1. A roller, in particular for roller or belt conveyors, comprising at least a tubular element (10) and heads (20) which are couplable to the tubular element (10) at ends of the tubular element (10), **characterised in that** at least one of the heads (20) is provided with at least an external coupling surface (21) having a grooved profile, the internal surface (12) of the tubular element (10) having, at least at the coupling end with the head (20), a correspondingly grooved profile, the coupling between the tubular element and the heads being removable such as to enable mounting and free demounting of the roller.

2. The roller (100) of claim 1, **characterised in that** it comprises at least a reinforcing element (60) removably housable internally of the tubular element (10) and provided with an external surface (61) having a grooved profile corresponding to the grooved profile of the internal surface (12) of the tubular element (10).

3. The roller (100") of one of the preceding claims, **characterised in that** it comprises an external cladding (50") provided with an internal surface having a grooved profile, an external surface (11 ") of the tubular element (10") having a correspondingly grooved profile, the external cladding being coaxially and removably insertable on the external surface of the tubular element (10").

4. A method for realising a roller, comprising stages of: predisposing a tubular element (10, 10') provided with an internal surface (12) having a grooved profile; cutting the tubular element to a predetermined length; predisposing at least a head (20) provided with an external coupling surface (21) having a grooved profile and being complentarily shaped to the profile of the tubular element; the internal surface (12) of the tubular element (10, 10') and the external surface (21) of the head (20) being shaped such as to be removably couplable; coupling the head (20) to the tubular element (10, 10") by introducing the external surface (21) of the head (20) to an end of the tubular element (10, 10").

5. The method of claim 4, comprising a stage of coupling a second head (20) to an opposite end of the tubular element (10, 10").

6. The method of claim 4, comprising a stage of introducing a reinforcing element (60) internally of the tubular element (10, 10"), which reinforcing element (60) is removably housable internally of the tubular element (1', 10"), the reinforcing element (60) being provided with an external surface (61) having a grooved profile corresponding to the grooved profile of the internal surface (12) of the tubular element (10, 10").

7. The method of claim 4, comprising stages of: predisposing an external cladding (50") provided with internal surface having a grooved profile; predisposing a tubular element (10, 10") provided with an external surface (11 ") having a grooved profile which is complementary to the internal surface of the cladding (50") such that the cladding (50") can be arranged removably coaxially on the external surface of the tubular element (10, 10"); arranging the external cladding coaxially on the external surface of the tubular element (10").

8. A kit for mounting a roller, comprising: a tubular element (10, 10"), provided with an internal surface (12) having a grooved channel, which is predisposed to be cut to a determined length; at least two heads (20), provided with an external surface (12) having a grooved profile which is complementarily shaped to the internal surface (12) of the tubular element (10, 10"), which two heads (20) are removably couplable to the ends of the tubular element.

9. The kit for mounting a roller of claim 7, comprising a reinforcing element (60) which can be housed removably internally of the tubular element (10) and is provided with an external surface (61) having a grooved profile which corresponds to the grooved profile of the internal surface (12) of the tubular element (10, 10").

10. A kit for mounting a roller of claim 7, comprising an external cladding (50") provided with a grooved internal surface, the external surface (11") of the tubular element (10") having a correspondingly grooved profile, the external cladding being insertable coaxially and removably on the external surface of the tubular element (10").
